# EUROPÄISCHE PATENTSCHRIFT

(11) **EP 1 526 317 B1**
(45) Veröffentlichungstag und Bekanntmachung des Hinweises auf die Patenterteilung: **02.01.2008**
(21) Anmeldenummer: 04018644.7
(22) Anmeldetag: 06.08.2004
(51) Int. Cl.: F16L 33/02, F16L 33/08, F16L 35/00

(54) **Schlauch mit einem einen Rand aufweisenden Schlauchende**
Hose having a hose end provided with a rim
Tuyau flexible avec un bord sur l'extrémité

(30) Priorität: 22.10.2003 DE 10349527
(43) Veröffentlichungstag der Anmeldung: 27.04.2005
(73) Patentinhaber: VERITAS AG, 63571 Gelnhausen (DE)
(72) Erfinder: Cöl, Isa, 60385 Frankfurt am Main (DE)
(74) Vertreter: Schickedanz, Willi

(56) Entgegenhaltungen:
- DE-C- 526 669
- DE-U1- 20 310 962

## Beschreibung

Die Erfindung betrifft einen Schlauch nach dem Oberbegriff des Patentanspruchs 1.

Schläuche, deren Enden mit Hilfe einer Schlauchschelle an einem Stutzen befestigt werden, kommen insbesondere bei Kraftfahrzeugmotoren zum Einsatz. Beispielsweise werden solche Schläuche mit Abgas-Krümmern von Otto-Motoren verbunden. Da diese Krümmer oft schwer zugänglich sind, werden die Enden der Schläuche lagegerecht vormontiert, damit sie nur noch auf den Krümmer geschoben und mit diesem mittels einer Schlauchschelle verbunden werden.

Es ist bereits ein Schlauch bekannt, auf dessen Ende eine Schelle aufgezogen ist, die mit einer Klammer, die über den Rand des Schlauchendes greift, am Schlauch befestigt ist (GB 2 343 927 A). Das Schlauchende ist hierbei rein zylindrisch ausgebildet.

Eine Schlauchschelle, die mit Hilfe von Klammern mit dem Rand eines Schlauchendes gekoppelt ist, ist ebenfalls bekannt (DE 195 33 553 A1). Auch hier ist der Schlauch an seinem Ende rein zylindrisch ausgebildet.

Weiterhin wurde ein Fixierteil für eine Schlauchschelle vorgeschlagen, das Klammern aufweist, welche um die Stirnfläche eines Schlauchendes herum geführt ist (DE 103 04 514). Das Schlauchende ist hierbei nicht rein zylindrisch.

Bei einer anderen vorgeschlagenen Haltevorrichtung für ein Schlauchende ist ebenfalls eine Klammer vorgesehen, die einerseits mit einem Schlauchende verbunden und andererseits um den Rand eines Schlauchendes herum geführt sind (DE 103 24 236 und DE 203 10 962 U).

Der Erfindung liegt die Aufgabe zugrunde, ein Schlauchende zu schaffen, auf dem eine Schlauchschelle oder dergleichen einen festen Sitz hat.

Diese Aufgabe wird mit den Merkmalen des Anspruchs 1 gelöst.

Die Erfindung betrifft somit einen Schlauch mit einem einen Rand aufweisenden Schlauchende. Hierbei weist der Schlauch an der Innenseite wenigstens eines seiner Enden unmittelbar unterhalb des Rands wenigstens eine Vertiefung auf. In diese Vertiefung wird ein Schenkel einer U-förmigen Klammer eingeklipst bzw. eingedrückt, die Teil einer Schellenfixierung ist, die ihrerseits eine Schelle umfasst. Auf diese Weise wird eine Schelle mittels einer fest mit dem Schlauchende verbundenen Schellenfixierung ebenfalls fest mit diesem Schlauchende verbunden.

Der mit der Erfindung erzielte Vorteil besteht insbesondere darin, dass das Ende des Schlauchs nach außen partiell angehoben ist. Hierdurch wird eine Verletzung des Stutzens, auf welchen das Schlauchende gestülpt wird, verhindert. Außerdem ist die Lage der Schellenfixierung vorbestimmt.

Ausführungsbeispiele der Erfindung sind in den Zeichnungen dargestellt und werden im Folgenden näher beschrieben. Es zeigen:
Fig. 1 eine Seitenansicht eines ersten Schlauchendes;
Fig. 2 eine Draufsicht auf den Randbereich des ersten Schlauchendes;
Fig. 3 eine perspektivische Darstellung des ersten Schlauchendes;
Fig. 4 eine Draufsicht auf den Randbereich eines zweiten Schlauchendes;
Fig. 5 eine perspektivische Darstellung des zweiten Schlauchendes;
Fig. 6 eine Explosionsdarstellung, bestehend aus Schlauchende, Schelle und Schellenfixierung;
Fig. 7 eine auf dem Schlauchende fixierte Schelle;
Fig. 8 eine perspektivische Darstellung eines in einem Kraftfahrzeug verwendeten Schlauchs.

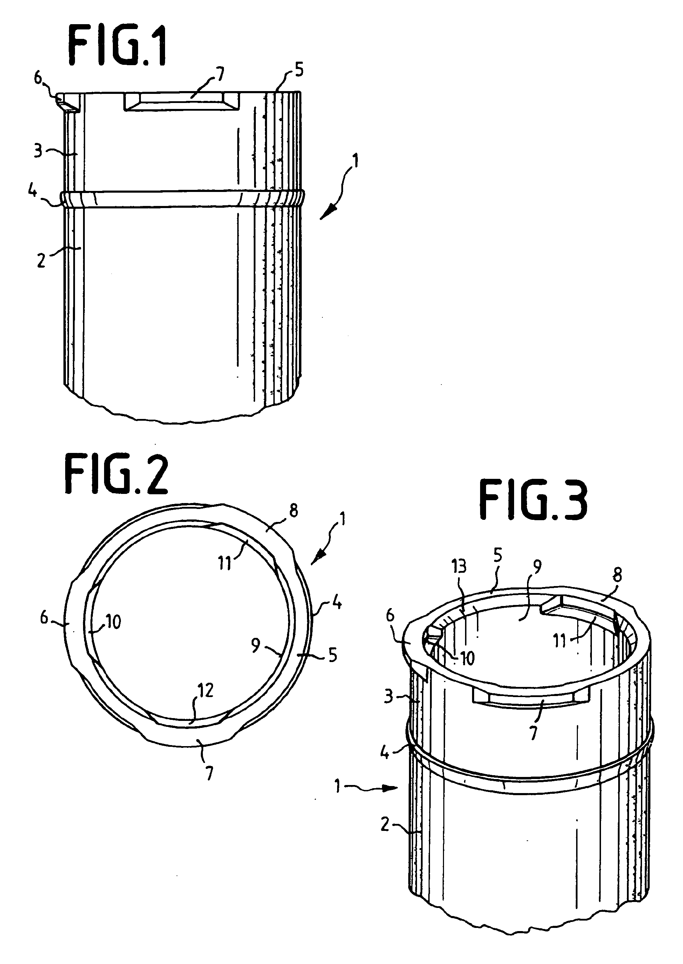

In der Fig. 1 ist die Seitenansicht einer ersten Ausführungsform des erfindungsgemäßen Schlauchendes 1 dargestellt. Dieses Schlauchende 1 besitzt einen unteren zylindrischen Teil 2 und einen oberen zylindrischen Teil 3. Beide Teile 2, 3 sind durch einen Wulst 4 voneinander getrennt. Auf den oberen zylindrischen Teil 3 kann eine nicht dargestellte Schelle aufgezogen werden. Dicht unterhalb des oberen Rands 5 des Schlauchendes 1 befinden sich drei nach außen gerichtete Vorsprünge, von denen man in der Fig. 1 nur zwei Vorsprünge 6, 7 erkennt.

In der Fig. 2 ist eine Ansicht auf den oberen Rand des Schlauchendes 1 dargestellt. Man erkennt hierbei die beiden Vorsprünge 6, 7 sowie den dritten Vorsprung 8. Diese Vorsprünge 6 bis 8 sind gegenüber der Innenwand 9 des Schlauchendes 1 etwas nach außen versetzt, sodass sich dort, wo sich die Vorsprünge 6 bis 8 befinden, jeweils eine Nische 10 bis 12 bildet. Diese Nischen 10 bis 12 dienen zur Aufnahme von Halteklammem für die nicht dargestellte Schelle.

Die Fig. 3 zeigt das Schlauchende 1 in einer perspektivischen Ansicht. Man erkennt hierbei wieder zwei der Nischen 10, 11. Außerdem ist zu erkennen, dass von der Innenwand 9 des Schlauchendes 1 eine Schräge 13 bis zum Rand 5 verläuft.

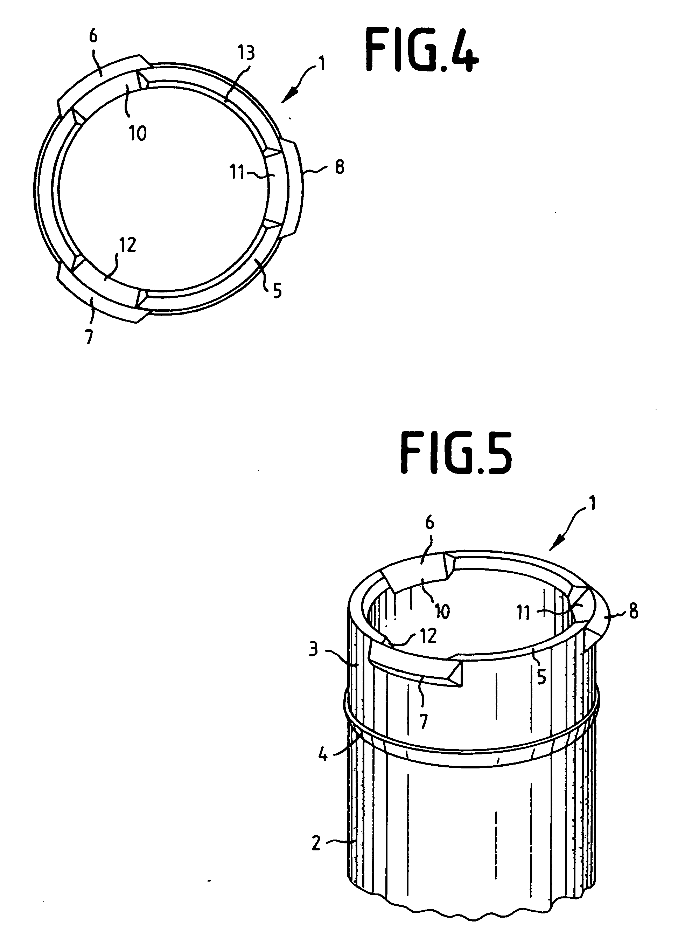

In der Fig. 4 ist eine Ansicht von oben auf den Rand 5 eines weiteren erfindungsgemäßen Schlauchendes 14 gezeigt. Man erkennt hierbei, dass die Rückwände der Nischen 10, 11 - anders als beim Ausführungsbeispiel der Fig. 1 bis 3 - stark abgeschrägt sind.

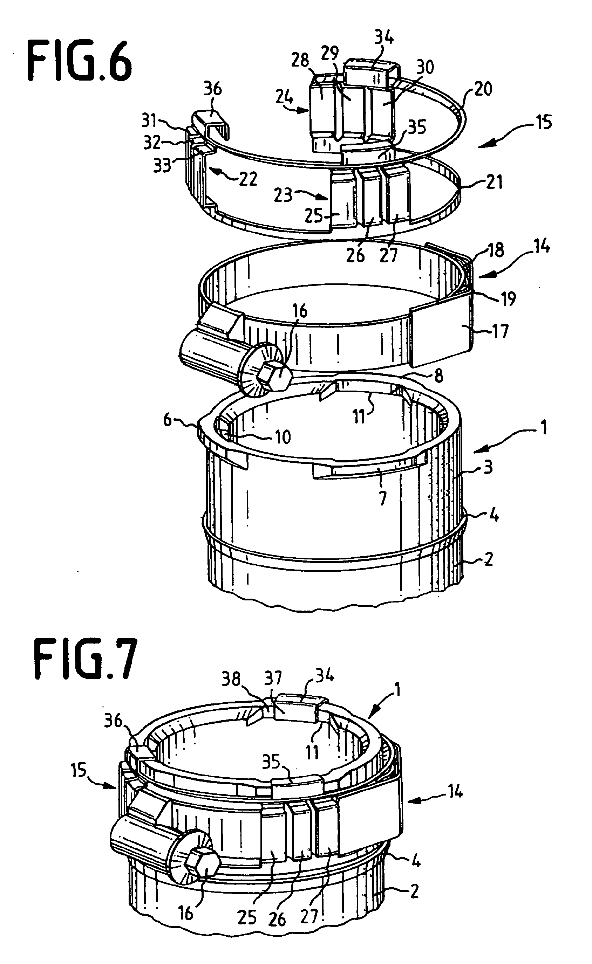

Die Fig. 5 zeigt das Schlauchende 1 noch einmal in einer perspektivischen Ansicht. Man erkennt hierbei, dass die Oberseiten der Vorsprünge 6 bis 8 nach außen abgeschrägt sind, d. h. diese Oberseiten verlaufen nicht auf der gleichen Ebene wie der Rand 5.

Die Fig. 6 zeigt eine Explosionsdarstellung, bei welcher das Schlauchende 1, eine Schelle 14 und eine Schellenfixierung 15 dargestellt sind. Die Schelle 14 weist eine Schraube 16 mit einem nicht dargestellten Gewinde auf, wobei dieses Gewinde auf einer ebenfalls nicht sichtbaren Quer-Rändelung abrollen kann. Außerdem ist die Schelle 14 mit einem großen Bogen 17 versehen, der zwei kleine Bögen 18, 19 überspannt. Die Schellenfixierung besteht im Wesentlichen aus zwei offenen Ringen 20, 21, die mittels dieser Brücken 22, 23, 24 miteinander verbunden sind, wobei diese Brücken aus jeweils drei nebeneinander angeordneten Stegen 25 bis 27; 28 bis 30; 31 bis 33 gebildet sind. Außerdem sind an diesen Brücken Klammern 34 bis 36 mit U-förmigem Querschnitt angeflanscht.

In der Fig. 7 sind die in Fig. 6 einzeln dargestellten Bauteile miteinander verbunden. Die Schelle 14 ist hierbei durch die Schellenfixierung 15 geschoben. Die Schellenfixierung 15 ist ihrerseits mittels der Klammern 34 bis 36 fest mit dem Schlauchende 1 verbunden. Hierbei liegen die Klammern 34 bis 36 mit ihrem nach innen gerichteten Schenkel 37 auf einer Innenwand 38 der jeweiligen Nische 10, 11 auf. Da die Klammern 34 bis 36 nicht in den Raum hineinragen, der später von einem Abgaskrümmer ausgefüllt wird, lockern sie sich nicht während der Montage, was einen festen Sitz von Schlauchschelle 14 und Schellenfixierung 15 gewährleistet.

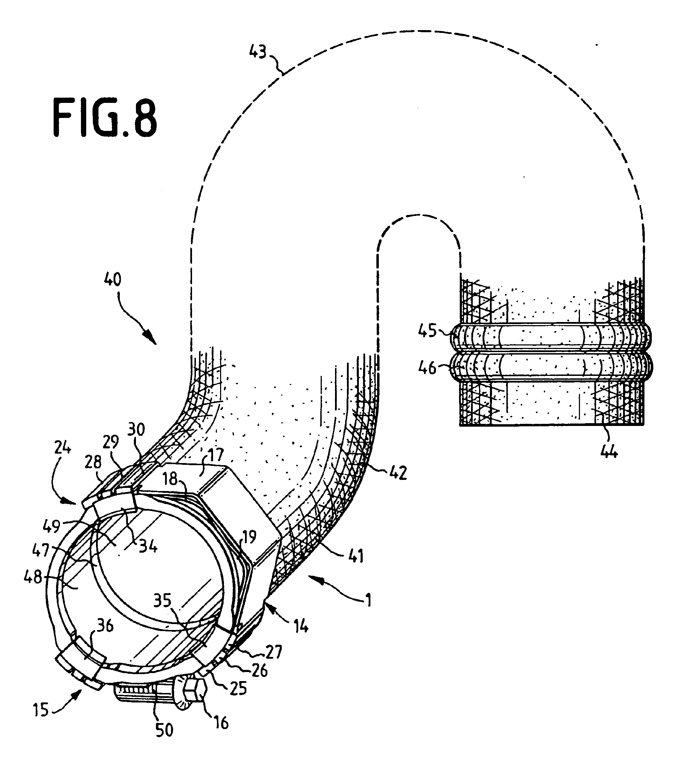

Die Fig. 8 zeigt noch einmal einen kompletten Schlauch 40, wie er in einem Kraftfahrzeug zum Einsatz kommen kann. Der Schlauch 40 ist hierbei gekrümmt, wobei ein erster Bereich 41 gerade in die Zeichenebene verläuft, dann in einer ersten Krümmung 42 nach oben geht und schließlich in einer zweiten Krümmung 43 senkrecht nach unten führt, wo sich das zweite Schlauchende 44 befindet, das mit Wülsten 45, 46 versehen ist.

Am ersten Schlauchende 1 sind die Schelle 14 und die Schellenfixierung 15 befestigt. Im Innern des Schlauchendes 1 erkennt man eine Vertiefung 47, die das Gegenstück des Wulstes 4 ist. Der innere Durchmesser des vorderen Bereichs 48 des Schlauchendes 1 ist größer als der innere Durchmesser des hinteren Bereichs 49 des Schlauchendes 1.

Das vormontierte Schlauchende 1 wird bei der Montage auf einen Abgaskrümmer aufgeschoben und die Schraube 16 angezogen, deren Gewinde 50 auf der geriffelten Außenseite der Schelle 14 abläuft, worauf diese das Schlauchende zusammendrückt.

## Patentansprüche

1. Schlauch zum Fixieren von Schlauchschellen, mit einem einen Rand aufweisenden Schlauchende, **dadurch gekennzeichnet, dass** unmittelbar unterhalb des Rands (5) und ausgehend von diesem Rand auf der Innenseite des Schlauchendes (1) wenigstens eine Ausnehmung (10 bis 12) für die Aufnahme einer mit einer Schlauchschellenfixierung (15) verbundenen Halteklammer (34 bis 36) vorgesehen ist.

2. Schlauch nach Anspruch 1, **dadurch gekennzeichnet, dass** in einem Abstand von dem Rand (5) auf der Außenseite des Schlauchendes (1) ein ringförmiger Wulst (4) um den äußeren Umfang des Schlauchendes (1) verläuft, wobei der Abstand zwischen dem Rand (5) und dem Wulst (4) wenigstens der Breite der Schlauchschellenfixierung (15) entspricht.

3. Schlauch nach Anspruch 1, **dadurch gekennzeichnet, dass** in einem Abstand von dem Rand (5) auf der Innenseite des Schlauchendes (1) eine ringförmige Nut (47) um den inneren Umfang des Schlauchendes (1) verläuft.

4. Schlauch nach Anspruch 3, **dadurch gekennzeichnet, dass** der Bereich (48) vor der Nut (47) einen größeren Innendurchmesser aufweist als der Bereich (49) hinter der Nut.

5. Schlauchschellenfixierung für den Einsatz bei einem Schlauch gemäß Anspruch 1, **dadurch gekennzeichnet, dass** sie wenigstens eine Klammer (34 bis 36) aufweist, die in eine Ausnehmung (10 bis 12) auf der Innenseite des Schlauchendes (1) eingreift.

6. Schlauchschellenfixierung nach Anspruch 5, **dadurch gekennzeichnet, dass** die Klammer (34) U- oder L-fönmig ausgebildet ist, wobei ein Schenkel (37) dieser Klammer (34) auf einer Wand (38) der Ausnehmung (11) aufliegt.

7. Schlauchschellenfixierung nach Anspruch 5, **dadurch gekennzeichnet, dass** sie zwei parallele und offene Ringe (20, 21) enthält, die über wenigstens eine Brücke (22 bis 24) miteinander verbunden sind.

8. Schlauchschellenfixierung nach Anspruch 5, **dadurch gekennzeichnet, dass** drei äquidistant angeordnete Klammern (34 bis 36) vorgesehen sind.

9. Schlauchschellenfixierung nach Anspruch 7, **dadurch gekennzeichnet, dass** die offenen Ringe (20, 21) über drei Brücken (22 bis 24) miteinander verbunden sind.

10. Schlauchschellenfixierung nach Anspruch 7 oder Anspruch 9, **dadurch gekennzeichnet, dass** jede Brücke (22 bis 24) aus drei Stegen (25 bis 27; 31 bis 33; 28 bis 30) besteht.

## Claims

1. Hose with hose end for fixing hose clamp fittings, said hose end having an edge, **characterized in that** immediately beneath the edge (5) and extending from the edge on the inside of the hose end (1) at least one recess (10 to 12) is provided for placing a clip (34 to 36) which is connected to a clamp fitting securement (15).

2. Hose as claimed in claim 1, **characterized in that** at a specified distance from the edge (5) on the outside of the hose end (1) an annular bulge (4) extends around the outer circumference of the hose end (1), whereby the distance between the edge (5) and the bulge (4) corresponds at least to the width of the clamp fitting securement (15).

3. Hose as claimed in claim 1, **characterized in that** at a specified distance from the edge (5) on the inside of the hose end (1) an annular groove (47) extends around the inner circumference of the hose end (1).

4. Hose as claimed in claim 3, **characterized in that** the region (48) in front of the groove (47) has a greater inner diameter than the region (49) behind the groove.

5. Clamp fitting securement for the application in a hose as claimed in claim 1, **characterized in that** it comprises at least one clip (34 to 36), which extends into a recess (10 to 12) on the inside of the hose end (1).

6. Clamp fitting securement as claimed in claim 5, **characterized in that** the clip (34) is implemented in the form of a U or an L, one shank (37) of this clip (34) disposed in contact on a wall (38) of the recess (11).

7. Clamp fitting securement as claimed in claim 5, **characterized in that** it comprises two parallel and open rings (20, 21) connected with one another via at least one bridge (22 to 24).

8. Clamp fitting securement as claimed in claim 5, **characterized in that** three equidistantly disposed clips (34 to 36) are provided.

9. Clamp fitting securement as claimed in claim 7, **characterized in that** the open rings (20, 21) are connected with one another via three bridges (22 to 24).

10. Clamp fitting securement as claimed in claim 7 or claim 9, **characterized in that** each bridge (22 to 24) is comprised of three webs (25 to 27; 31 to 33; 28 to 30).

## Revendications

1. Tuyau flexible pour la fixation de colliers de serrage, avec une extrémité de tuyau flexible comportant un bord, **caractérisé par** au moins un évidement (10 à 12) situé directement sous le bord (5) et partant de ce bord vers le côté intérieur de l'extrémité (1) du tuyau flexible, prévu pour l'admission d'un clip de retenue (34 à 36) relié à une fixation (15) de collier de serrage.

2. Tuyau flexible selon la revendication 1, **caractérisé en ce qu'**un bourrelet annulaire (4) écarté du bord (5) sur le côté extérieur de l'extrémité (1) du tuyau flexible s'étend sur la circonférence extérieure de l'extrémité (1) du tuyau flexible, l'écart entre le bord (5) et le bourrelet (4) correspondant au moins à la largeur de la fixation (15) du collier de serrage.

3. Tuyau flexible selon la revendication 1, **caractérisé en ce qu'**une rainure annulaire (47) écartée du bord (5) sur le côté intérieur de l'extrémité (1) du tuyau flexible s'étend sur la circonférence intérieure de l'extrémité (1) du tuyau flexible.

4. Tuyau flexible selon la revendication 3, **caractérisé en ce que** la région (48) précédant la rainure (47) possède un diamètre intérieur supérieur à celui de la région (49) consécutive à la rainure.

5. Fixation de collier de serrage pour une utilisation sur un tuyau flexible selon la revendication 1, **caractérisée en ce qu'**elle comporte au moins un clip (34 à 36), qui s'introduit dans un évidement (10 à 12) dans le côté intérieur de l'extrémité (1) du tuyau flexible.

6. Fixation de collier de serrage selon la revendication 5, **caractérisée en ce que** le clip (34) est conçu en forme de U ou de L, une branche (37) de ce clip (34) reposant sur une paroi (38) de l'évidement (11).

7. Fixation de collier de serrage selon la revendication 5, **caractérisée en ce qu'**elle comprend deux anneaux ouverts et parallèles (20, 21), qui sont reliés entre eux à l'aide d'au moins un pont (22 à 24).

8. Fixation de collier de serrage selon la revendication 5, **caractérisée par** trois clips équidistants (34 à 36).

9. Fixation de collier de serrage selon la revendication 7, **caractérisée en ce que** les anneaux ouverts (20, 21) sont reliés entre eux par le biais de trois ponts (22 à 24) .

10. Fixation de collier de serrage selon la revendication 7 ou la revendication 9, **caractérisée en ce que** chaque pont (22 à 24) est constitué de trois branches (25 à 27 ; 31 à 33 ; 28 à 30).
